# EUROPÄISCHE PATENTSCHRIFT

(11) **EP 1 797 350 B1**
(45) Veröffentlichungstag und Bekanntmachung des Hinweises auf die Patenterteilung: **08.12.2010**
(21) Anmeldenummer: 05788561.8
(22) Anmeldetag: 21.09.2005
(51) Int. Cl.: F16H 35/02, F16H 7/18

(54) **ZUGMITTELTRIEB MIT SCHWINGUNGSDÄMPFUNG**
TRACTION MECHANISM DRIVE WITH VIBRATION DAMPING
ENTRAINEMENT A MOYEN DE TRACTION A AMORTISSEMENT DES VIBRATIONS

(30) Priorität: 05.10.2004 DE 102004048283
(43) Veröffentlichungstag der Anmeldung: 20.06.2007
(73) Patentinhaber: Schaeffler Technologies GmbH & Co. KG, 91074 Herzogenaurach (DE)
(72) Erfinder: PFLUG, Rainer, 91560 Heilsbronn (DE); HARTMANN, Bernd, 91085 Weisendorf (DE)
(86) Internationale Anmeldenummer: PCT/EP2005/010179
(87) Internationale Veröffentlichungsnummer: WO 2006/037466

(56) Entgegenhaltungen:
- WO-A-03/046413
- WO-A-2005/095826
- DE-A1- 19 520 508
- DE-A1- 19 649 397
- DE-A1- 19 649 397
- DE-A1- 19 812 939
- FR-A- 2 824 599
- JP-U- 1 095 538
- US-A- 4 696 663
- US-A1- 2004 144 348
- PATENT ABSTRACTS OF JAPAN Bd. 012, Nr. 321 (M-736), 31. August 1988 (1988-08-31) & JP 63 088368 A (MITSUBISHI MOTORS CORP), 19. April 1988 (1988-04-19)

## Beschreibung

### Gebiet der Erfindung

Die Erfindung bezieht sich auf einen Zugmitteltrieb für Verbrennungsmotoren bei dem neben dem treibenden Rad und dem getriebenen Rad, die zur Schwingungsdämpfung unrund ausgebildet sind, zusätzliche Verbraucher vorhanden sind.

### Hintergrund der Erfindung

Aus der DE 196 49 397 A1 ist ein Zugmitteltrieb mit den Merkmalen des Oberbegriffes des Anspruchs 1 bekannt.

Typischerweise ist das treibende Rad auf der Kurbelwelle während das bzw. die getriebenen Räder auf der Nockenwelle sitzen. Durch eine auf die speziellen Gegebenheiten, insbesondere die Kolbenzahl des Motors, abgestimmte unrunde Ausgestaltung von treibendem Rad und getriebenem Rädern lässt sich eine sehr gute Dämpfung der Schwingungen und Spannungsschwankungen innerhalb des Riemens oder der Kette erreichen, was sowohl zu einer erheblichen Geräuschdämpfung beiträgt als auch die Lebensdauer erhöht.

In der DE 195 20 508 A1 ist bereits vorgeschlagen worden, ein Mittel vorzusehen, das dem Umschlingungstrieb eine zusätzliche Ungleichförmigkeit aufprägt. Diese Ungleichförmigkeit kann durch ein unrund ausgebildetes und/oder exzentrisch gelagertes Rad erzeugt werden. Diese künstlich erzeugten Ungleichförmigkeiten sollen den Schwingungsänderungen entgegenwirken, die durch Verbrennungsvorgänge und Ventilbewegungen entstehen.

Wenn nun außer der Nockenwelle noch ein weiterer Verbraucher, beispielsweise eine Einspritzpumpe od. dgl., vom gleichen Zugmitteltrieb her betrieben werden soll, so wird dadurch die vorstehend beschriebene Schwingungsdämpfung stark beeinträchtigt bzw. manchmal fast unmöglich gemacht.

### Zusammenfassung der Erfindung

Der Erfindung liegt daher die Aufgabe zugrunde, einen Zugmitteltrieb der eingangs genannten Art mit Zusatzverbrauchern so auszugestalten, dass die ID²-Schwingungsdämpfungsmaßnahmen am treibenden und getriebenen Rad optimal greifen können trotz des Vorhandenseins des Zusatzverbrauchers.

Zur Lösung dieser Aufgabe ist erfindungsgemäß vorgesehen, dass zugseitig zwischen getriebenem Rad und treibendem Rad ausschließlich lastfrei laufende Umlenkrollen vorhanden sind und etwaige Zusatzverbraucher in den anderen Zweig des Triebmittels verlagert sind.

Überraschenderweise hat es sich gezeigt, dass Einspritzpumpen oder sonstige Nebenaggregate ohne weiteres im Zugmitteltrieb als Zusatzverbraucher angeordnet sein können, wenn man nur vermeidet, dass sie zugseitig zwischen dem getriebenen Rad und dem treibenden Rad liegen, wo sich die Kraftsignale n-ter Ordnung mit denen der treibenden und abtreibenden Räder so überlagern würden, dass die Kompensation und Dämpfung gemäß ID² nur unzureichend realisierbar wäre.

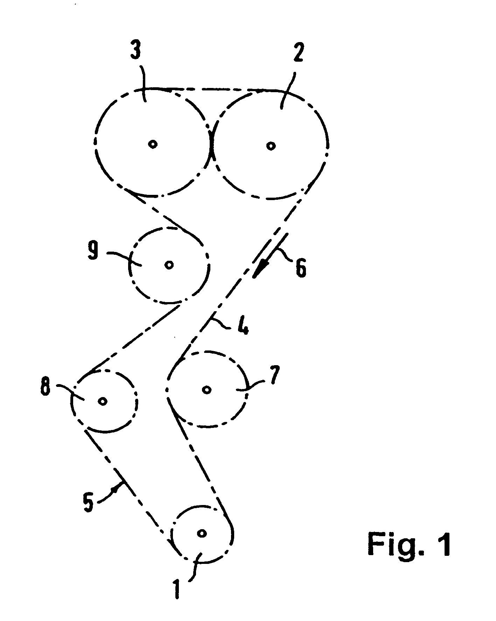

### Kurze Beschreibung der Zeichnung

Weitere Vorteile, Merkmale und Einzelheiten der Erfindung ergeben sich aus der nachfolgenden Beschreibung eines Ausführungsbeispiels sowie anhand der Zeichnung, die schematisch einen Zugmitteltrieb zeigt.

### Detaillierte Beschreibung der Zeichnung

Zwischen der unten liegenden Kurbelwelle 1 und den oben liegenden Nockenwellen 2 und 3 ist im Zugtrum 4 des Umschlingungstrieb 5 - der Pfeil 6 gibt die Umlaufrichtung des Umschlingungstriebs an - lediglich eine lastfrei laufende Umlenkrolle 7 angeordnet. Etwaig zusätzliche Verbraucher wie Einspritzpumpen, Wasser pumpen oder sonstige Nebenaggregate können anstelle der Umlenkrollen 8 und 9 eingeschaltet werden, um die erfolgreiche Schwingungsdämpfung nach ID² durch entsprechend unrunde Ausbildung des Kurbelwellenrades bzw. der Nockenwellenräder nicht störend zu beeinflussen.

**Bezugszahlen**
- 1: Kurbelwelle
- 2: Nockenwelle
- 3: Nockenwelle
- 4: Zugtrum
- 5: Umschlingungstrieb
- 6: Pfeil
- 7: Umlenkrolle
- 8: Umlenkrolle
- 9: Umlenkrolle

## Patentansprüche

1. Zugmitteltrieb für Verbrennungsmotoren bei dem neben dem treibenden Rad (1) und dem getriebenen Rad (2), die zur Schwingungsdämpfung unrund ausgebildet sind, zusätzliche Verbraucher (3, 8, 9) vorhanden sind, **dadurch gekennzeichnet, dass** im Zugtrum zwischen getriebenem Rad (2) und treibendem Rad (1) ausschließlich lastfrei laufende Umlenkrollen (7) vorhanden sind.

## Claims

1. Traction mechanism drive for internal combustion engines, in which traction mechanism drive, in addition to the driving wheel (1) and the driven wheel (2), said wheels being non-circular for the purposes of vibration damping, additional consumers (3, 8, 9) are present, **characterized in that** only deflecting rollers (7) which run without load are present in the tension strand between the driven wheel (2) and the driving wheel (1).

## Revendications

1. Entraînement à moyen de traction pour moteurs à combustion interne, dans lequel, en plus de la roue d'entraînement (1) et de la roue entraînée (2), qui sont réalisées de manière non circulaire pour amortir les oscillations, on prévoit des charges supplémentaires (3, 8, 9), **caractérisé en ce que** des poulies de renvoi (7) tournant exclusivement sans charge sont prévues dans le tronçon de traction entre la roue entraînée (2) et la roue d'entraînement (4).
